# FASCICULE DE BREVET EUROPEEN

(11) **EP 3 211 626 B1**
(45) Date de publication et mention de la délivrance du brevet: **31.10.2018**
(21) Numéro de dépôt: 16181835.6
(22) Date de dépôt: 29.07.2016
(51) Int. Cl.: G09C 1/00, H04L 9/00, G06K 19/073, H04K 3/00

(54) **PROCÉDÉ ET DISPOSITIF DE BROUILLAGE ÉLECTROMAGNÉTIQUE POUR CIRCUIT INTÉGRÉ**
VERFAHREN UND VORRICHTUNG ZUR ELEKTROMAGNETISCHEN VERZERRUNG FÜR INTEGRIERTEN SCHALTKREIS
ELECTROMAGNETIC JAMMING FOR INTEGRATED CIRCUIT PROCESS AND DEVICE

(30) Priorité: 25.02.2016 FR 1651552
(43) Date de publication de la demande: 30.08.2017
(73) Titulaire: STMicroelectronics (Rousset) SAS, 13790 Rousset (FR)
(72) Inventeur: ORDAS, Thomas, 83470 Pourcieux (FR); SARAFIANOS, Alexandre, 13530 Trets (FR); CHESNAIS, Stéphane, 13710 Fuveau (FR); MARINET, Fabrice, 13790 Chateauneuf le rouge (FR)
(74) Mandataire: Casalonga

(56) Documents cités:
- EP-A1- 2 587 469
- US-A1- 2011 246 789
- US-A1- 2013 321 053

## Description

Des modes de mise en oeuvre et de réalisation de l'invention concernent les circuits intégrés, notamment mais non exclusivement ceux comportant des modules sécurisés, et en particulier la protection de ce type de circuit contre les analyses par canaux auxiliaires, connues par l'homme du métier sous la dénomination anglo-saxonne « Side channel analysis », et tout particulièrement contre les analyses des signaux électromagnétiques produits par le circuit intégré lors de son fonctionnement.

En fonctionnement, un circuit intégré produit des signaux électromagnétiques par l'intermédiaire des pistes métalliques du circuit intégré, par exemple lors des commutations de ses composants logiques. En analysant ces signaux électromagnétiques, à l'aide par exemple d'une antenne et d'algorithmes mathématiques dédiés, il est possible d'obtenir des informations sur les opérations effectuées ainsi que sur les données manipulées et/ou sur leurs occurrences.

Il est donc recommandé de brouiller autant que possible les signaux électromagnétiques émis par le circuit intégré.

US2011/246789 A1 divulgue un circuit de couplage inductif sans contact équipé d'une antenne, et la génération d'un brouillage de la consommation en courant dudit circuit.

US2013/321053 divulgue une génération d'un signal d'horloge à spectre étalé ayant une composante aléatoire et pouvant être émis par un émetteur tel qu'une antenne.

EP2587469 A1 divulgue un circuit intégré comportant des modules et un circuit de dissimulation permettant de rendre les puissances dissipées par lesdits modules indépendantes de leurs activités.

Ainsi, selon un mode de mise en oeuvre et de réalisation, il est proposé un procédé et un dispositif permettant de brouiller les émissions électromagnétiques d'un circuit intégré de manière à rendre encore plus difficile une éventuelle déduction des opérations effectuées par le circuit intégré.

Selon un aspect, il est proposé un procédé de brouillage d'un rayonnement électromagnétique émis par une partie d'une région d'interconnexion située au dessus d'au moins une zone d'un circuit électronique intégré réalisé dans et/ou sur un substrat semi-conducteur, le procédé comprenant une disposition d'au moins une antenne métallique au dessus de ladite au moins une zone du circuit intégré et une circulation dans ladite au moins une antenne d'un signal électrique comportant au moins une caractéristique pseudo-aléatoire.

En d'autres termes, on diminue le rapport signal sur bruit du circuit en ajoutant une source d'émissions électromagnétiques indépendante de la logique du circuit intégré, de manière à rendre plus difficile l'analyse des signaux électromagnétiques globaux émis par le circuit intégré et donc à rendre plus difficile une observation du fonctionnement du circuit par une analyse par canal auxiliaire.

La circulation du signal électrique comprend la génération d'un signal d'horloge, une application pseudo-aléatoire d'un retard, fixe ou variable, sur certains au moins des fronts dudit signal d'horloge de façon à obtenir ledit signal électrique, et une transmission dudit signal électrique dans l'antenne.

On obtient ainsi un signal électrique ayant ici un facteur de forme (ladite au moins une caractéristique) pseudo-aléatoire.

On dispose une première antenne et au moins une deuxième antenne au dessus de ladite au moins une zone du circuit intégré, le procédé pouvant alors comprendre une sélection d'au moins une desdites antennes, et une circulation dudit signal électrique dans ladite au moins une antenne sélectionnée.

Selon un autre aspect, il est proposé un dispositif de brouillage d'un rayonnement électromagnétique émis par au moins une partie d'une région d'interconnexion située au dessus d'au moins une zone d'un circuit électronique intégré réalisé dans et/ou sur un substrat semi-conducteur comprenant au moins une antenne située au dessus de ladite au moins une zone du circuit, et des moyens de génération configurés pour générer un signal électrique comportant au moins une caractéristique pseudo-aléatoire et couplés à ladite au moins une antenne.

Les moyens de génération comprennent un générateur configuré pour générer un signal d'horloge et des moyens pour appliquer de façon pseudo-aléatoire un retard, fixe ou variable, sur certains au moins des fronts dudit signal d'horloge.

La partie d'interconnexion comprend plusieurs niveaux de métallisation dont au moins un niveau de métallisation comprend au moins une piste métallique formant au moins une partie de ladite au moins une antenne.

Le dispositif comprend une première antenne et au moins une deuxième antenne, le dispositif comprenant des moyens de sélection configurés pour sélectionner au moins l'une desdites première et deuxième antennes de façon à délivrer ledit signal électrique à ladite au moins une antenne sélectionnée.

La première antenne et ladite au moins une deuxième antenne peuvent être situées dans un même niveau de métallisation de la région d'interconnexion du circuit, ou dans des niveaux de métallisation distincts.

Selon un mode de réalisation, la première antenne peut être située au dessus d'une première zone du circuit intégré et la dite au moins une deuxième antenne peut être située au dessus d'une deuxième zone du circuit intégré distincte de la première zone.

Selon un autre mode de réalisation, la première antenne peut être située au dessus d'une première zone du circuit intégré et ladite au moins une deuxième antenne peut être située au moins en partie au dessus de ladite au moins une première zone.

Les moyens de sélection peuvent comprendre un registre de contrôle et des portes logiques couplées entre lesdites antennes et ledit registre de contrôle.

D'autres avantages et caractéristiques de l'invention apparaîtront à l'examen de la description détaillée de modes de mise en oeuvre et de réalisation de l'invention, nullement limitatifs, et des dessins annexés sur lesquels :

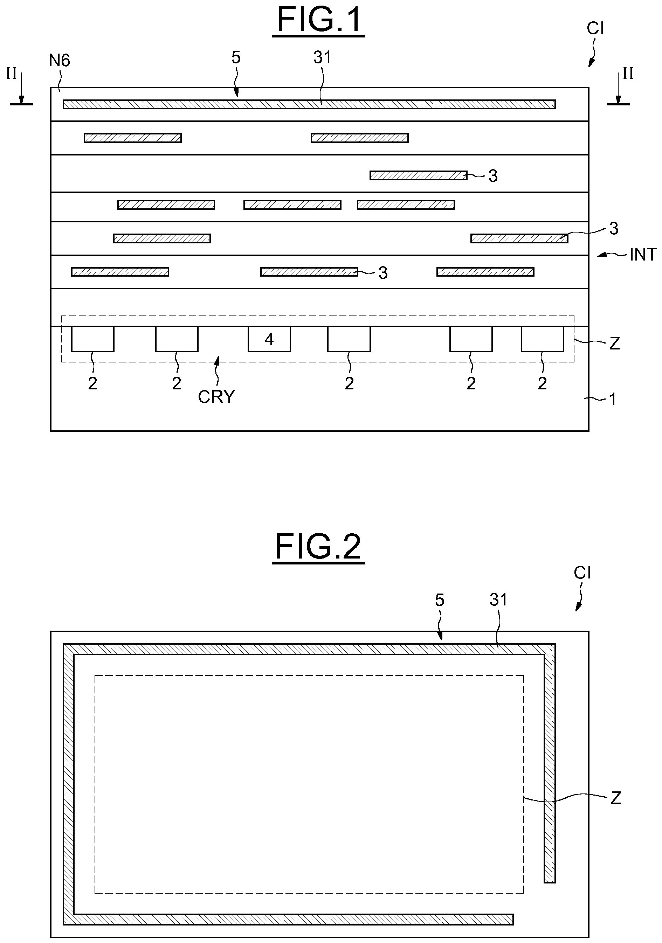

- les figures 1 à 6 illustrent des modes de mise en oeuvre et de réalisation de l'invention.

La figure 1 illustre un circuit intégré CI, et la figure 2 est une vue partielle en coupe selon la ligne de coupe II-II de la figure 1.

Le circuit intégré CI comporte un substrat semi-conducteur 1, dans lequel une pluralité de composants 2 a été réalisée dans une zone Z du circuit intégré. Dans cet exemple, tous les composants du circuit intégré CI sont compris dans la zone Z.

Les composants comportent ici notamment des portes logiques, formant par exemple un circuit cryptographique CRY destiné notamment à réaliser des opérations de manière sécurisée.

Le substrat 1 est surmonté par une région d'interconnexion INT (connue par l'homme du métier sous l'acronyme anglo-saxon BEOL : « Back End Of Line »), comportant plusieurs niveaux de métal comportant chacun une ou plusieurs pistes métalliques 3 enrobées dans un matériau isolant (« Intermetal dielectric » selon une dénomination anglo-saxonne bien connue de l'homme du métier).

Certaines des pistes métalliques 3 des niveaux de métal sont des pistes d'interconnexion reliant certains au moins des composants 2 de la zone Z du circuit intégré entre eux par l'intermédiaire de vias (non représentées à des fins de simplification).

D'autres pistes métalliques peuvent être par exemple des pistes de redistribution de l'alimentation ou être reliées à la masse.

Le niveau six N6 de métallisation, qui ici est le niveau le plus haut, comporte une unique piste métallique 31 qui n'est pas directement couplée à des composants du circuit cryptographique CRY, mais comme il sera vu ci-après, forme une antenne émettrice 5 couplée par l'intermédiaire de vias à des moyens de génération 4 réalisés dans et sur le substrat 1 et configurés pour générer un signal électrique SE qui comporte une caractéristique pseudo-aléatoire. Ces moyens de génération 4 et l'antenne 5 forment ici un exemple de dispositif de brouillage électromagnétique.

Dans cet exemple, le niveau six de métallisation N6 n'est donc pas un niveau d'interconnexion car il ne comporte pas de piste métallique 3 reliant certains au moins des composants 2 de la zone Z du circuit entre eux, mais il est toutefois réalisé selon le même procédé que celui utilisé pour réaliser les différents niveaux de métal.

Cela étant, il serait tout à fait possible d'envisager que le niveau six de métallisation N6 comporte des pistes métalliques d'interconnexion s'étendant par exemple à l'intérieur du périmètre délimité par la piste métallique 31.

Il convient de noter que l'antenne émettrice 5 pourrait comprendre plusieurs boucles métalliques situées à des niveaux de métallisations différents et reliées par des vias.

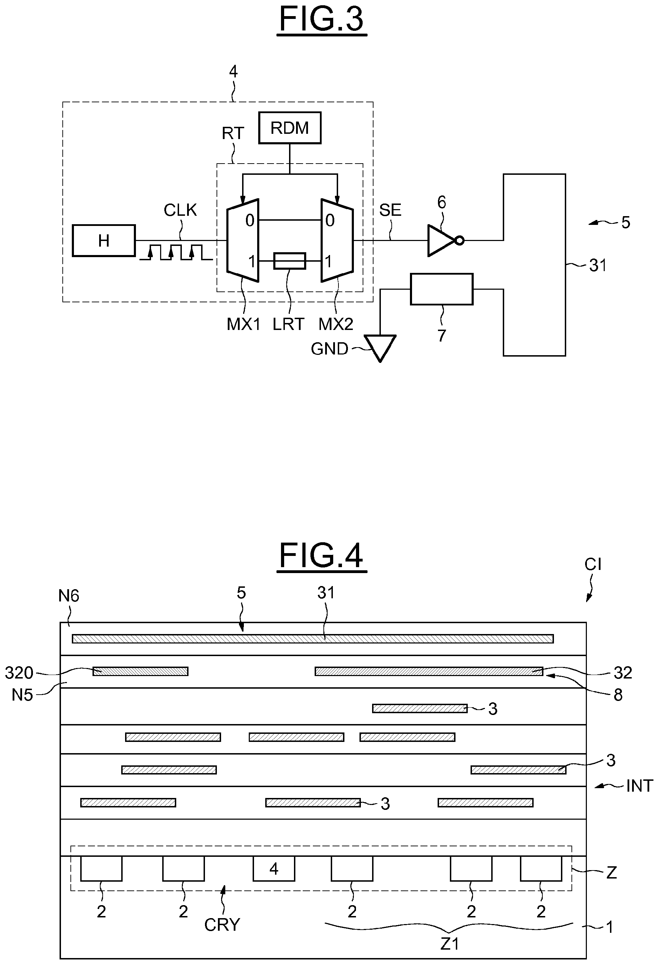

La figure 3 est une représentation schématique d'un exemple de réalisation des moyens de génération 4 du signal électrique SE.

L'antenne émettrice 5 comporte la piste métallique 31 dont une première extrémité est couplée à un élément tampon 6 (« Buffer » selon la dénomination anglo-saxonne) servant classiquement à amplifier et mettre en forme le signal SE généré par les moyens de génération 4.

Un élément capacitif 7 est couplé entre une seconde extrémité de la piste métallique 31 et la masse GND. L'élément capacitif est ici utilisé pour tirer un courant vers la masse GND.

L'élément tampon 6 et l'élément capacitif 7 sont des composants réalisés dans et/ou sur le substrat semi-conducteur 1, et sont électriquement connectés à la première piste métallique 31 par des vias.

Les moyens de génération 4 du signal électrique SE comprennent un générateur H apte à délivrer un signal d'horloge CLK dont la sortie est couplée à un circuit de retard RT, et un générateur de valeurs pseudo-aléatoires RDM dont la sortie est également couplée au circuit de retard RT.

Il convient de noter que le générateur H peut être ici également utilisé par le circuit cryptographique CRY.

Le circuit de retard RT comporte par exemple une ligne à retard LRT configurée pour appliquer un retard aux fronts montants du signal d'horloge CLK.

Cette ligne à retard LRT est connectée par l'intermédiaire d'un premier multiplexeur MX1 à la sortie du générateur H et connectée par l'intermédiaire d'un deuxième multiplexeur MX2 à l'entrée de l'élément tampon 6.

Un chemin direct, c'est-à-dire sans retard, est également connecté entre les autres entrées des deux multiplexeurs.

Ces multiplexeurs MX1 et MX2 sont commandés par la valeur binaire 0 ou 1 délivrée par le générateur de valeurs pseudo-aléatoires RDM.

En fonction de la valeur générée par le générateur RDM, le circuit de retard RT peut ou non sélectionner la ligne à retard LRT, de manière à ce que certains au moins des fronts montants du signal d'horloge CLK soient retardés ou non retardés de façon pseudo-aléatoire.

Alors que dans ce mode de réalisation le retard de la ligne à retard LRT est fixe (constant), il serait possible, en variante, de prévoir une ligne à retard configurée pour avoir un retard variable, par exemple de façon pseudo-aléatoire, en fonction de la valeur logique délivrée par un autre générateur de nombres pseudo-aléatoires.

Ainsi, de la même manière que les pistes métalliques d'interconnexion 3 génèrent des signaux électromagnétiques en fonction des opérations effectuées par le circuit cryptographique CRY, la piste métallique 31 de l'antenne 5 génère des signaux électromagnétiques additionnels de façon pseudo-aléatoire qui, en s'ajoutant aux signaux électromagnétiques émis par les pistes métalliques 3, rendent plus difficile l'analyse de la signature électromagnétique globale du circuit intégré CI.

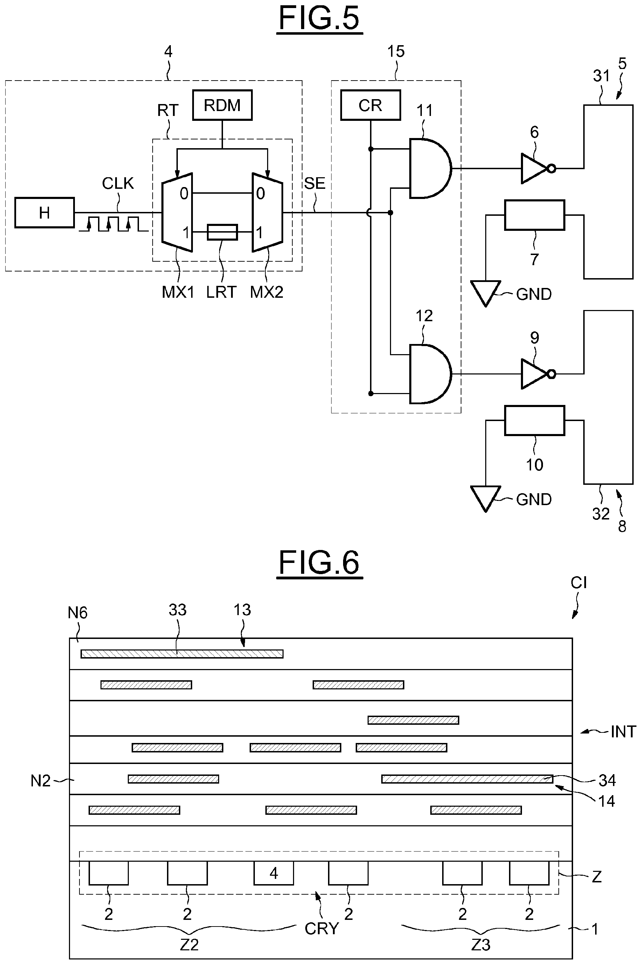

Selon le mode de réalisation illustré sur les figures 4 et 5, le circuit intégré CI comporte une deuxième antenne 8 comportant une deuxième piste métallique 32 située dans le niveau cinq de métal N5 et couplée à un deuxième élément tampon 9 et à un deuxième élément capacitif 10. La deuxième piste métallique 32 est située au dessus d'une sous-zone Z1 de la zone Z du circuit intégré.

Le niveau cinq N5 de métal comprend en outre ici une ou plusieurs pistes de métal 320 permettant l'interconnexion de composants logique du circuit cryptographique CRY.

Comme l'illustre la figure 5, le dispositif de brouillage électromagnétique comporte des moyens de sélection 15 couplés aux moyens de génération 4 et aux première et deuxième antennes 5 et 8.

Les moyens de sélection 15 comprennent dans cet exemple de réalisation un registre de contrôle CR, une première porte logique 11 de type « ET » et une deuxième porte logique 12 de type « ET », et sont configurés pour sélectionner la ou les antennes qui recevront le signal électrique SE.

Les deux portes logiques 11 et 12 comportent chacune deux entrées, dont une première entrée est couplée au registre de contrôle CR, et une deuxième entrée est couplée à la sortie des moyens de génération 4.

La première porte logique 11 comporte une sortie couplée à la première antenne 5 et la deuxième porte logique 12 comporte une sortie couplée à la deuxième antenne 8.

Ainsi, lors du fonctionnement du circuit, le registre de contrôle CR met à un les premières entrées des portes logiques couplées aux antennes qu'il sélectionne, de manière à ce que lors de la génération d'un front montant du signal électrique SE, seules les portes logiques sélectionnées par le registre de contrôle CR transmettent le signal électrique SE à l'antenne qui leur est associée.

La sélection des antennes par le registre de contrôle CR peut dépendre des opérations effectuées par le circuit cryptographique CRY, ou en variante, se faire de manière pseudo-aléatoire de façon à brouiller encore davantage les émissions électromagnétiques.

Selon une variante illustrée sur la figure 6, le circuit intégré CI comporte une première antenne 13 comportant une première piste métallique 33 située dans le niveau six N6 de métallisation, au dessus d'une première sous-zone Z2 de la zone Z du circuit intégré CI, et une deuxième antenne 14 comportant une deuxième piste métallique 34 située dans le niveau deux N2 de métallisation au dessus d'une deuxième sous-zone Z3 du circuit intégré CI, distincte de la deuxième sous-zone Z2.

La zone Z du circuit intégré CI comporte en outre d'autres composants non compris dans les sous-zones Z2 et Z3 et au dessus desquels ne se trouve pas d'antenne émettrice.

Il convient de noter que les modes de mise en oeuvre et de réalisation présentés ici ne sont nullement limitatifs. Notamment, bien qu'il ait été présenté ici des circuits intégrés comportant une ou deux antennes, il est tout à fait possible d'envisager un circuit intégré comportant un nombre plus important d'antennes, dont les pistes métalliques sont situées dans un ou plusieurs niveaux de métal, au dessus d'une ou plusieurs zones du circuit intégré.

Par ailleurs alors que la caractéristique pseudo-aléatoire du signal électrique SE décrite ci-avant était le facteur de forme du signal, il serait possible d'envisager d'autres caractéristiques du signal qui pourraient être modifiées de façon pseudo-aléatoire, comme par exemple son amplitude et/ou sa phase.

## Revendications

1. Procédé de brouillage d'un rayonnement électromagnétique émis par une partie d'une région d'interconnexion (INT) située au dessus d'au moins une zone (Z) d'un circuit électronique intégré (CI) réalisé dans et/ou sur un substrat semi-conducteur (1), comprenant une disposition d'au moins une antenne métallique (5) au dessus de ladite au moins une zone (Z) du circuit intégré (CI) et une circulation dans ladite au moins une antenne (5) d'un signal électrique (SE) comportant au moins une caractéristique pseudo-aléatoire,
- dans lequel la circulation dudit signal électrique (SE) comprend la génération d'un signal d'horloge (CLK), une application pseudo-aléatoire d'un retard sur certains au moins des fronts dudit signal d'horloge (CLK) de façon à obtenir ledit signal électrique (SE), et une transmission dudit signal électrique (SE) dans l'antenne (5),
- dans lequel le retard est fixe ou variable,
- dans lequel on dispose une première antenne (5) et au moins une deuxième antenne (8) au dessus de ladite au moins une zone (Z) du circuit intégré (CI), le procédé comprenant en outre une sélection d'au moins une desdites antennes (5, 8), et une circulation dudit signal électrique (SE) dans ladite au moins une antenne sélectionnée (5, 8).

2. Dispositif de brouillage d'un rayonnement électromagnétique susceptible d'être émis par au moins une partie d'une région d'interconnexion (INT) située au dessus d'au moins une zone (Z) d'un circuit électronique intégré (CI) réalisé dans et/ou sur un substrat semi-conducteur (1) comprenant au moins une antenne (5) située au dessus de ladite au moins une zone (Z) du circuit (CI), et des moyens de génération (4) configurés pour générer un signal électrique (SE) comportant au moins une caractéristique pseudo-aléatoire et couplés à ladite au moins une antenne (5),
- dans lequel les moyens de génération (4) comprennent un générateur (H) configuré pour générer un signal d'horloge (CLK) et des moyens de retard (RT, RDM) pour appliquer de façon pseudo-aléatoire un retard sur certains au moins des fronts dudit signal d'horloge (CLK),
- dans lequel les moyens de retard (RT, RDM) sont configurés pour appliquer de façon pseudo-aléatoire un retard fixe ou variable sur certains au moins des fronts dudit signal d'horloge (CLK),
- dans lequel la région d'interconnexion (INT) comprend plusieurs niveaux de métallisation dont au moins un niveau de métallisation (N6) comprend au moins une piste métallique (31) formant au moins une partie de ladite au moins une antenne (5),
- comprenant une première antenne (5) et au moins une deuxième antenne (8), le dispositif comprenant des moyens de sélection (15) configurés pour sélectionner au moins l'une desdites première et deuxième antennes (5, 8) de façon à délivrer ledit signal électrique (SE) à ladite au moins une antenne sélectionnée.

3. Dispositif selon la revendication 2, dans lequel la première antenne et ladite au moins une deuxième antenne sont situées dans un même niveau de métallisation de la région d'interconnexion du circuit.

4. Dispositif selon la revendication 2, dans lequel la première antenne (5) et ladite au moins une deuxième antenne (8), sont situées dans des niveaux de métallisation (N6, N5) distincts.

5. Dispositif selon la revendication 3 ou 4, dans lequel la première antenne (13) est située au dessus d'une première zone (Z2) du circuit intégré et ladite au moins une deuxième antenne (14) est située au dessus d'une deuxième zone (Z3) du circuit intégré distincte de la première zone (Z2).

6. Dispositif selon la revendication 3 ou 4, dans lequel la première antenne (5) est située au dessus d'une première zone (Z) du circuit intégré (CI) et ladite au moins une deuxième antenne (8) est située au moins en partie au dessus de ladite au moins une première zone (Z).

7. Dispositif selon l'une quelconque des revendications 2 à 6, dans lequel les moyens de sélection (15) comprennent un registre de contrôle (CR) et des portes logiques (11, 12) couplées entre lesdites antennes (5, 8) et ledit registre de contrôle (CR).

## Patentansprüche

1. Verfahren zur Verzerrung einer elektromagnetischen Strahlung, die von einem Abschnitt eines Verbindungsbereichs (INT) abgegeben wird, der sich über mindestens einer Zone (Z) einer integrierten elektronischen Schaltung (CI) befindet, die in und/oder auf einem Halbleitersubstrat (1) realisiert ist, umfassend ein Anordnen mindestens einer metallischen Antenne (5) über der mindestens einen Zone (Z) der integrierten Schaltung (CI) und ein Zirkulieren, in der mindestens einen Antenne (5), eines elektrischen Signals (SE), das mindestens eine pseudozufällige Eigenschaft aufweist,
- wobei das Zirkulieren des elektrischen Signals (SE) das Erzeugen eines Taktsignals (CLK), ein pseudozufälliges Anwenden einer Verzögerung auf zumindest einige der Flanken des Taktsignals (CLK), um das elektrische Signal (SE) zu erhalten, und ein Übertragen des elektrischen Signals (SE) in die Antenne (5) umfasst,
- wobei die Verzögerung fest oder variabel ist,
- wobei eine erste Antenne (5) und mindestens eine zweite Antenne (8) über der mindestens einen Zone (Z) der integrierten Schaltung (CI) angeordnet wird, das Verfahren ferner umfassend ein Auswählen mindestens einer der Antennen (5, 8) und ein Zirkulieren des elektrischen Signals (SE) in der mindestens einen ausgewählten Antenne (5, 8).

2. Vorrichtung zur Verzerrung einer elektromagnetischen Strahlung, die von mindestens einem Abschnitt eines Verbindungsbereichs (INT) abgegeben werden kann, der sich über mindestens einer Zone (Z) einer integrierten elektronischen Schaltung (CI) befindet, die in und/oder auf einem Halbleitersubstrat (1) realisiert ist, umfassend mindestens eine Antenne (5), die sich über der mindestens einen Zone (Z) der Schaltung (CI) befindet, und Mittel zur Erzeugung (4), die konfiguriert sind, ein elektrisches Signal (SE) zu erzeugen, das mindestens eine pseudozufällige Eigenschaft aufweist, und mit der mindestens einen Antenne (5) gekoppelt sind,
- wobei die Mittel zur Erzeugung (4) einen Erzeuger (H), der konfiguriert ist, ein Taktsignal (CLK) zu erzeugen, und Mittel zur Verzögerung (RT, RDM), um auf pseudozufällige Weise eine Verzögerung auf zumindest einige der Flanken des Taktsignals (CLK) anzuwenden, umfassen,
- wobei die Mittel zur Verzögerung (RT, RDM) konfiguriert sind, auf pseudozufällige Weise eine feste oder variable Verzögerung auf zumindest einige der Flanken des Taktsignals (CLK) anzuwenden,
- wobei der Verbindungsbereich (INT) mehrere Metallisierungsebenen umfasst, von denen mindestens eine Metallisierungsebene (N6) mindestens eine metallische Bahn (31) umfasst, die mindestens einen Abschnitt der mindestens einen Antenne (5) bildet,
- umfassend eine erste Antenne (5) und mindestens eine zweite Antenne (8), die Vorrichtung umfassend Mittel zur Auswahl (15), die konfiguriert sind, mindestens die eine der ersten und der zweiten Antenne (5, 8) auszuwählen, um das elektrische Signal (SE) der mindestens einen ausgewählten Antenne zuzuführen.

3. Vorrichtung nach Anspruch 2, wobei sich die erste Antenne und die mindestens eine zweite Antenne in einer selben Metallisierungsebene des Verbindungsbereichs der Schaltung befinden.

4. Vorrichtung nach Anspruch 2, wobei sich die erste Antenne (5) und die mindestens eine zweite Antenne (8) in getrennten Metallisierungsebenen (N6, N5) befinden.

5. Vorrichtung nach Anspruch 3 oder 4, wobei sich die erste Antenne (13) über einer ersten Zone (Z2) der integrierten Schaltung befindet und sich die mindestens eine zweite Antenne (14) über einer zweiten Zone (Z3) der integrierten Schaltung befindet, die von der ersten Zone (Z2) getrennt ist.

6. Vorrichtung nach Anspruch 3 oder 4, wobei sich die erste Antenne (5) über einer ersten Zone (Z) der integrierten Schaltung (CI) befindet und sich die mindestens eine zweite Antenne (8) zumindest teilweise über der mindestens einen ersten Zone (Z) befindet.

7. Vorrichtung nach einem der Ansprüche 2 bis 6, wobei die Mittel zur Auswahl (15) ein Steuerungsregister (CR) und Logikgatter (11, 12), die zwischen die Antennen (5, 8) und das Steuerungsregister (CR) geschaltet sind, umfassen.

## Claims

1. Method for jamming electromagnetic radiation emitted by a portion of an interconnect region (INT) located above at least one zone (Z) of an integrated electronic circuit (CI) produced in and/or on a semiconductor substrate (1), comprising placing at least one metal antenna (5) above said at least one zone (Z) of the integrated circuit (CI) and passing through said at least one antenna (5) an electrical signal (SE) having at least one pseudo-random property,
- wherein the operation of passing said electrical signal (SE) comprises generating a clock signal (CLK), applying pseudo-randomly a delay to at least some of the fronts of said clock signal (CLK) so as to obtain said electrical signal (SE), and transmitting said electrical signal (SE) through the antenna (5),
- wherein the delay is fixed or variable,
- wherein a first antenna (5) and at least one second antenna (8) are placed above said at least one zone (Z) of the integrated circuit (CI), the method furthermore comprising selecting at least one of said antenna (5, 8), and passing said electrical signal (SE) through said at least one selected antenna (5, 8).

2. Device for jamming electromagnetic radiation liable to be emitted by at least one portion of an interconnect region (INT) located above at least one zone (Z) of an integrated electronic circuit (CI) produced in and/or on a semiconductor substrate (1), comprising at least one antenna (5) located above said at least one zone (Z) of the circuit (CI) and generating means (4) configured to generate an electrical signal (SE) including at least one pseudo-random property and coupled to said at least one antenna (5),
- wherein the generating means (4) comprise a generator (H) configured to generate a clock signal (CLK) and delaying means (RT, RDM) for applying pseudo-randomly a delay to at least some of the fronts of said clock signal (CLK),
- wherein the delaying means (RT, RDM) are configured to apply pseudo-randomly a fixed or variable delay to at least some of the fronts of said clock signal (CLK),
- wherein the interconnect region (INT) comprises a plurality of metallization levels, at least one metallization level (N6) of which comprises at least one metal track (31) forming at least one portion of said at least one antenna (5),
- comprising a first antenna (5) and at least one second antenna (8), the device comprising selecting means (15) configured to select at least one of said first and second antennae (5, 8) so as to deliver said electrical signal (SE) to said at least one selected antenna.

3. Device according to Claim 2, wherein the first antenna and said at least one second antenna are located in the same metallization level of the interconnect region of the circuit.

4. Device according to Claim 2, wherein the first antenna (5) and said at least one second antenna (8) are located in distinct metallization levels (N6, N5).

5. Device according to Claim 3 or 4, wherein the first antenna (13) is located above a first zone (Z2) of the integrated circuit and said at least one second antenna (14) is located above a second zone (Z3) of the integrated circuit, said second zone being distinct from the first zone (Z2).

6. Device according to Claim 3 or 4, wherein the first antenna (5) is located above a first zone (Z) of the integrated circuit (CI) and said at least one second antenna (8) is located at least partially above said at least one first zone (Z).

7. Device according to any one of Claims 2 to 6, wherein the selecting means (15) comprise a control register (CR) and logic gates (11, 12) coupled between said antennae (5, 8) and said control register (CR).
